Europäisches Patentamt

European Patent Office

Office européen des brevets

(19)

(11) EP 0 946 003 A2

(12) **EUROPEAN PATENT APPLICATION**

(43) Date of publication:
29.09.1999 Bulletin 1999/39

(51) Int Cl.⁶: H04B 7/26

(21) Application number: 99301926.4

(22) Date of filing: 12.03.1999

(84) Designated Contracting States:
AT BE CH CY DE DK ES FI FR GB GR IE IT LI LU
MC NL PT SE
Designated Extension States:
AL LT LV MK RO SI

(30) Priority: 25.03.1998 GB 9806268

(71) Applicant: Alstom UK Limited
Rugby, Warwickshire CV21 1TB (GB)

(72) Inventor: Lian, Bing-Zhong
Stafford ST17 4RZ (GB)

(74) Representative: Dargavel, Laurence Peter
Alstom UK Limited,
PO Box 70,
Mill Road
Rugby, Warwickshire CV21 1TB (GB)

(54) **Method for determining propagation delays and method for detecting processor-clock drift in a communications system**

(57) A method of determining propagation-delay changes in the send-and-receive transmission paths connecting two communications units (A, B) in a communications system employs a multi-stage process in which, in first stage - in which it assumed that the propagation delays are equal - approximations (tp1*, tp2*) of the propagation delays (tp1, tp2) are derived in the two units, a value (dt) of the phase difference between the two clocks driving the respective processors of the two units is derived and initial values of the propagation delays are calculated using the approximations and the phase-difference value. Subsequently, in one or more further stages further approximations (tp1*, tp2*) of the propagation delays (tp1, tp2) are derived and, using these further approximations and the phase-difference value (dt), further values of propagation delay are calculated, these being taken as the actual new propagation-delay values. This process continues in a cyclical fashion, with changes of propagation delay being detectable by simple comparison of successive corresponding delay values. Also disclosed is a method of detecting drift between the two processor clocks, in which the method just described is basically followed and the propagation-delay approximations are monitored to detect opposite changes in the pair of approximations. When opposite changes are detected, the rate of change is determined and, if it is below a predetermined rate, it is concluded that clock drift has occurred. In a preferred embodiment, once drift has been established an actual change measured between successive approximations is used to adjust the initial value of the clock phase difference and thereafter each new updated value, thereby compensating for the drift.

Fig.7.

EP 0 946 003 A2

**Description**

The invention relates to a method for determining the values of propagation delay in a bi-directional communications system, and to a method for detecting drift between the independent processor clocks used in such a system. The invention finds particular application in the field of power-line current and voltage measurement using relay apparatus.

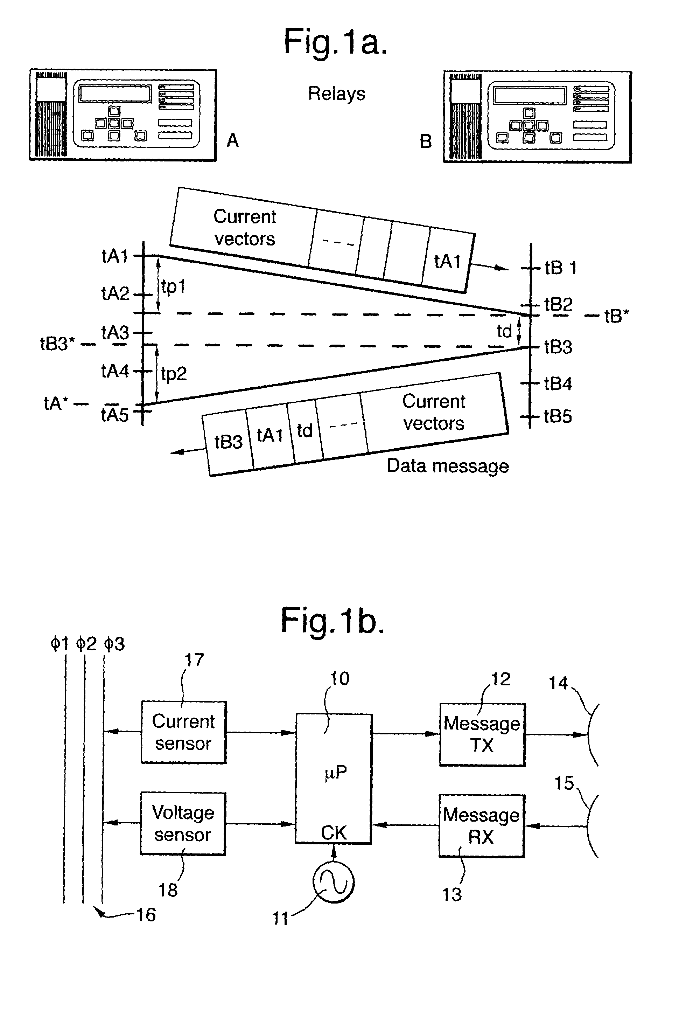

Power-line relay arrangements are known in which two relays - assumed designated relay A and relay B (see Figure 1a) - measure a value of current and/or voltage at respective ends of a power line (not shown). Each relay may include, as shown in Figure 1b, a processor unit 10 driven by a clock source 11, a message-transmitting means 12 and a message-receiving means 13 connected at one end to the processor 10 and at the other end to respective antennae 14, 15, which may in practice take the form of a common antenna. Providing measurements of the various electrical parameters relating to a power line 16 are current and voltage sensors 17, 18, respectively, which provide inputs to the processor 10 to be processed and finally included in a data message string to be transmitted by antenna 14.

The relays operate as communications apparatus in a communications system in which the messages from each relay are communicated to the other relay by wireless, normally by radio or optical fibres. In the example shown in Figure 1a, relay A at time tA1 transmits to relay B a message consisting of a data word, being a current vector, and a number of other words containing time information, including the time tA1 at which it sent off the message. Relay B receives this message at time tB* after a propagation delay equal to tp1 and, after a delay td, transmits its own message at time tB3, this message likewise consisting of a current-vector word and a corresponding number of time-related words. These words are shown to include time tB3, time tA1 which relay B learned from receipt of A's previous transmission, and time td, the time interval between tB* and tB3. Finally, B's message reaches A at time tA*.

Normally, in power-line measurements it is required that the two relays compute current and other electrical quantities based on samples taken at the same point in time. However, it can be seen from Figure la that relay A's sampling points may well not coincide with relay B's (tB3 lies between tA3 and tA4), so that relay A must find a way of adjusting the value of B's vector so that it has the value it would have had if it had been sampled at time tA3 or tA4. To achieve this, relay A computes the total propagation delay tp1 and tp2 between the two relays as:

$$tp1 + tp2 = tA^* - tA1 - td$$

and, on the assumption that the two propagation delays are the same, so that:

$$tp1 = tp2 = tp = (tA^* - tA1 - td)/2,$$

calculates the time tB3* as:

$$tB3^* = tA^* - tp.$$

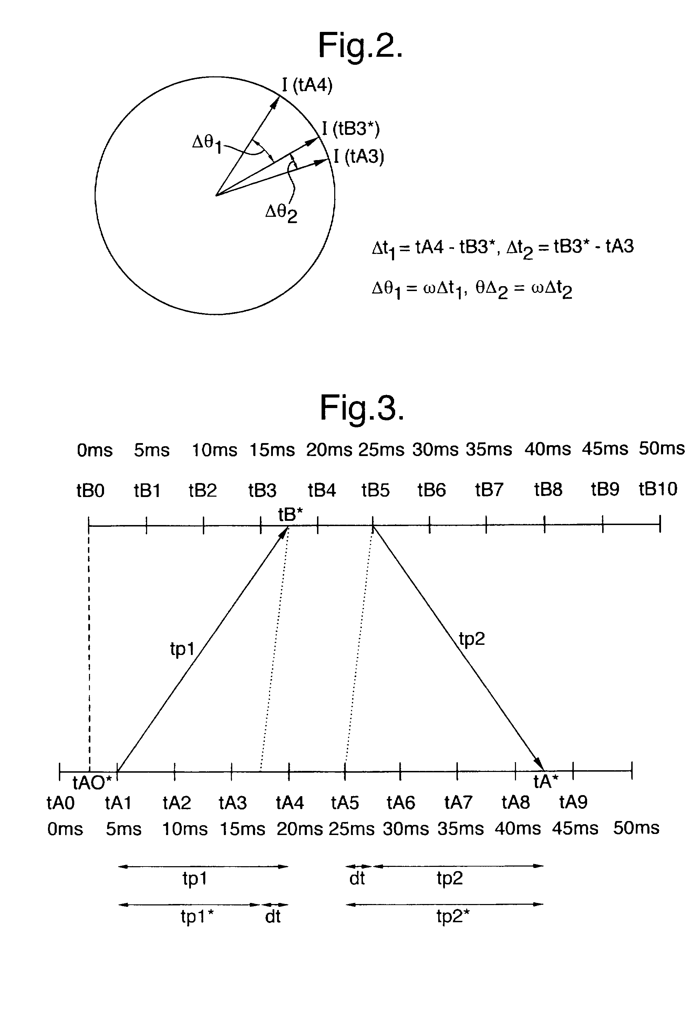

Relay A is then able to rotate the current vector of relay B either forwards to coincide with tA4, or backwards to coincide with tA3 (which presumably has been stored in a memory location to allow further processing) by an angle corresponding to a time difference tA4-tB3* and tB3*-tA3, respectively. This process is illustrated in Figure 2 and applies equally by analogy to rotation by relay B of a current vector received from relay A.

While this approach works well as long as the propagation delays are equal, which in practice means using the same transmission route in both directions, there are occasions when it will be found necessary periodically to switch transmission in one direction (e.g. the direction from relay A to relay B) to a different path, while perhaps leaving the other path (B to A) as it was. This will result in unequal propagation delays and consequent problematic inaccuracies in vector adjustment in the relays.

The present invention aims to address this problem of unequal propagation delays by providing a way of determining the values of the individual propagation delays and, consequently, of detecting changes therein, and also tackles the consequences of drift that can arise between the clocks driving the various relays.

According to a first aspect of the invention, there is provided a method for determining the values of respective propagation delays (tp1, tp2) of send and receive paths in a communications system, said system comprising first and second spatially separated communications apparatus (A, B) each comprising a message-transmitting means, a message-receiving means and a processing means driven by a clock source, the clock sources having a mutual phase relationship (dt), said method comprising the steps of:

- in a first stage:

(a) establishing respective first approximations (tp1*, tp2*) of said propagation delays (tp1, tp2);
(b) under an initial assumption that said propagation delays are equal, using said first approximations to derive a value (dt) representative of said phase relationship;
(c) using said first approximations (tp1*, tp2*) and said phase-relationship value (dt) to derive first values (tp1, tp2) of said propagation delays, said first values being equal values;

- in each of one or more successive further stages:

(d) establishing respective further approximations (tp1*, tp2*) of said propagation delays (tp1, tp2), and
(e) using said further approximations (tp1*, tp2*) and said phase-relationship value (dt) to derive further values (tp1, tp2) of said propagation delays.

Steps (a) and (d) may utilise the following parameters: a first transmit time (tA1), relative to said first apparatus' own clock source, at which said first apparatus (A) transmits a message to said second apparatus (B); a first receive time (tB*), relative to said second apparatus' own clock source, at which said second apparatus (B) receives said message; a second transmit time (tB5), relative to said second apparatus' own clock source, at which said second apparatus (B) transmits a further message to said first apparatus (A), and a second receive time (tA*), relative to said first apparatus' own clock source, at which said first apparatus (A) receives said further message.

An approximation of the propagation delay (tp1) from said first apparatus (A) to said second apparatus (B) and an approximation of the propagation delay (tp2) from said second apparatus (B) to said first apparatus (A) may be derived as:

$$tp1^* = tB^* - tA1$$

$$tp2^* = tA^* - tB5$$

where tp1*, tp2* are respective said approximations, tA1 is said first transmit time, tB5 is said second transmit time, tB* is said first receive time and tA* is said second receive time. The value representative of said phase relationship may be derived as:

$$dt = 0.5 \, (tp2^* - tp1^*)$$

where dt is said representative value.

In said steps (c) and (e) a propagation delay (tp1) from said first apparatus (A) to said second apparatus (B) and a propagation delay (tp2) from said second apparatus (B) to said first apparatus (A) may be derived as:

$$tp1 = tp1^* + dt$$

$$tp2 = tp2^* - dt$$

where tp1, tp2 are respective said propagation delays.

Advantageously, successive further propagation-delay values may be compared with respective preceding propagation-delay values with a view to detecting changes in propagation delay.

In accordance with a further aspect of the invention, there is provided a method for detecting a drift between first and second processor clocks of respective first and second communications apparatus (A, B) in a bi-directional communications system, said first and second apparatus exchanging message data including data representative of a time (tA1, tB5) of transmission of said message data by each apparatus to the other, and of a time period (tdA, tdB) elapsed between receipt by said each apparatus of message data from the other apparatus and said transmission of message data by each apparatus, said transmission time (tA1, tB5) and said time period (tdA, tdB) being referenced to a nominal clock rate of said each apparatus, wherein each apparatus (A, B) on a cyclical basis:

(a) derives, from a time (tA*; tB*), referenced to its own nominal clock rate, of receipt of message data from the other apparatus and from said data representative of a transmission time (tA1; tB5) and time period (tdA; tdB), a first value (tp1*) approximating a delay in propagation (tp1) of said message data from said first apparatus (A) to the second (B) and a second value (tp2*) approximating a delay in propagation (tp2) of said message data from said second apparatus (B) to the first (A);

(b) compares said first and second approximating values (tp1*, tp2*) with corresponding values previously obtained, and if corresponding said first values (tp1*) and corresponding said second values (tp2*) have changed in opposite respective directions and if a rate of change is below a predetermined rate, infers that a drift between the clock rates of said first and second clocks has taken place.

Preferably, each apparatus in step (b) determines that said change in said second values (tp1*, tp2*) is monotonic before inferring that a drift has taken place.

Advantageously, each apparatus is arranged to determine values of the propagation delays between said apparatus and, in a further step (c), to employ said inference that a drift has taken place to correct for errors in said propagation-delay values arising as a result of said drift.

In a first cycle at the start of a communications process between said apparatus and subsequent to said step (a), each apparatus may derive from said approximating values (tp1*, tp2*) a value (dt) representative of a phase difference between said clocks, and in said first and in subsequent cycles each apparatus may derive from said approximating values (tp1*, tp2*) and from said phase-difference representative value (dt) said propagation delay values (tp1, tp2), each said apparatus in subsequent cycles in said step (b) detecting a predetermined amount of change in said approximating values (tp1*, tp2*) and in said step (c) applying that amount to modify said phase-difference representative value (dt).

The invention accordingly provides a method for determining the values of respective propagation delays (tp1, tp2) of send and receive paths in a communications system, which method takes account of the desirability of correcting the propagation delays for drift between the clock rates, the communications system comprising first and second spatially separated communications apparatus (A, B) each communications apparatus comprising a message-transmitting means, a message receiving means and a processing means driven by a clock means, the first and second clock means having first and second clock rates and a mutual phase relationship (dt) therebetween, the method comprising the steps of:

recording a time tA1 when the first communications apparatus (A) sends a message to the second communications apparatus (B) over the send path,

recording a time tB* when the message from the first communications apparatus (A) reaches the second communications apparatus (B),

recording a time tB5 when the second communications apparatus (B) sends a response message to the first communications apparatus (A) over the receive path,

recording a time tA* when the response message reaches the first communications apparatus (A),

calculating an approximate propagation delay tp1* in the send path as tp1* = tB* - tA1,

calculating an approximate propagation delay tp2* in the receive path as tp2* = tA* - tB5,

calculating the phase relationship dt between the clock sources as dt = 0.5 (tp2* - tp1*) if it is an initial calculation of dt at a start of communications between the first and second communications apparatus,

subsequent to the initial calculation of the phase relationship dt,

comparing the approximate propagation delay tp1* in the send path and the approximate propagation delay tp2* in the receive path with corresponding values thereof previously obtained,

detecting that a drift has occurred between the first and second clock rates if tp1* and tp2* change monotonically in opposite directions over a large number of calculations and if the rate of change is below a predetermined rate,

if a clock drift is detected, deriving a clock drift value ddt from the change in tp1* and tp2* and calculating a new phase relationship $dt_{new}$ as

$$dt_{new} = dt + ddt, \text{ and}$$

calculating the propagation delays tp1, tp2 as either

tp1 = tp1* + $dt_{new}$ for the sending path and tp2 = tp2* - $dt_{new}$ for the response path if a clock drift has been detected, or

tp1 = tp1* + dt for the sending path and tp2 = tp2* - dt for the response path if a clock drift has not been detected.

The first and second communications apparatus (A, B) may be relays connected to respective ends of an electrical power line, the relays transmitting to each other a message which includes electrical-parameter data relating to said line.

It is envisaged that occasionally communications between the relays will be lost. To take account of this, it may be arranged that a relative drift rate of the clocks is regularly determined and, following a break in a communications link between said first and second communications apparatus, said first and second propagation-delay approximating values are derived and from these values, and a value of drift calculated from the product of the latest said determined drift rate and a duration of said break, the respective propagation-delay values are derived.

Embodiments of the invention will now be described, purely by way of example, with reference to the drawings, of which:

Figure 1a shows a bi-directional communications system involving two power-line current relays and Figure 1b is a block diagram illustrating the functional aspects of each of the relays shown in Figure 1a;

Figure 2 is a diagram depicting the process of vector rotation carried out in each of the relays of Figure 1;

Figures 3 to 6 are timing diagrams showing the process of intercommunication between two relays and illustrating a method according to the invention for evaluating the propagation delays therebetween, the propagation delays being of various values in the figures;

Figure 7 is a timing diagram analogous to those shown in Figures 3 to 6 and illustrating a method according to the invention for detecting a negative drift occurring between the processor clocks of the two relays;

Figure 8 is a timing diagram illustrating, in an exaggerated form, a method according to the invention for correcting for clock drift between the two relays;

Figure 9 is an extended timing diagram showing the subdivision of a clock-drift correction period into four zones in order to establish a drift-correction criterion;

Figure 10 is a diagram similar to that of Figure 8 and illustrating the clock-drift compensation method according to the invention in a more practical setting; and

Figure 11 is a timing diagram similar to that in Figure 7, illustrating a method according to the invention for detecting a positive drift occurring between the processor clocks of the two relays.

In summary, the algorithms used in this invention are intended to enable determination of the true values of propagation delays in send and receive paths of communications systems as described below, even when one or more of the following problems are present:

(1) the propagation delay times of the sending path and the receiving path of a communication channel have different values;

(2) the sending path and the receiving path are of different lengths;

(3) clock drives at each end of the communication channel are not synchronised (for example, one clock may start before the clock at the other end is switched on);

(4) the clock drives drift apart at a certain drift rate and the pattern of drift is nonlinear;

(5) there is a break in the communications link between the clock drives.

A first aspect of the invention can be illustrated with reference to Figure 3. In Figure 3 it is assumed that the two relays A and B both sample the current at their respective ends of a power line at 5ms intervals, but that the sampling instants are not coincident - rather, relay B samples 2.5ms later (or earlier) than relay A. However, the two sampling rates remain identical and do not drift. Relay A sends out a message to relay B at time tA1 and this message is received by B at time tB*. Similarly, relay B sends out its message at time tB5 and this then arrives at relay A at time tA*. Note that tB* and tA* are reckoned according to the individual time frames of relays B and A, respectively. The actual propagation delay tpl is the delay from A to B and amounts to three sampling divisions in the diagram, i.e. 15ms, and likewise delay tp2.

However, these delays can each be broken down into two components: what might be termed a "pseudo propagation delay" tp1*, tp2*, which is the delay between the time of transmission of the message according to the transmitting relay's time frame and the time of receipt of the message by the receiving relay according to the latter's time frame, and a clock-difference value, dt, which represents the phase difference between the clocks of relays A and B. Thus, from the diagram, tp1* is the time between tB* and tA1, whereas tp2* is the time between tA* and tB5, dt being the time difference between, say, tA0* and tB0. The pseudo propagation delays are, in effect, approximations of the actual propagation delays.

From Figure 3 the following equation can be derived:

$$tp2^* + tp1 = tp1^* + dt + dt + tp2$$

therefore,

$$dt = (tp2^* + tp1 - tp1^* - tp2)/2.$$

It is assumed that, during the start-up period, where communications are first established, the propagation delays tp1 and tp2 are equal. Hence the above equation simplifies to:

$$dt = (tp2^* - tp1^*)/2$$

To establish the value of dt it is therefore necessary to find the values of tp1* and tp2*. This is achieved by the following relationships:

$$
\begin{aligned}
tp1^* \ &= \ tB^* - tA1 \\
&= \ 17.5ms - 5ms \\
&= \ 12.5ms
\end{aligned}
$$

and

$$
\begin{aligned}
tp2^* \ &= \ tA^* - tB5 \\
&= \ 42.5ms - 25ms \\
&= \ 17.5ms
\end{aligned}
$$

therefore,

$$
\begin{aligned}
dt \ \ &= \ (17.5 - 12.5)/2 \\
&= \ 2.5ms.
\end{aligned}
$$

Having found dt, the actual propagation delays tp1 and tp2 can be obtained as follows:

$$
\begin{aligned}
tp1 \ &= \ tp1^* + dt \\
&= \ 15ms
\end{aligned}
$$

$$
\begin{aligned}
tp2 \ &= \ tp2^* - dt \\
&= \ 15ms.
\end{aligned}
$$

tp1 and tp2 are used by relays B and A, respectively, for the purposes of time-aligning the current vector data received from relays A and B, respectively, as described earlier. Thus, at the very start of the communications process each relay calculates and records tp1* and tp2* and from these quantities dt, and then finally calculates its respective true propagation delay tp1, tp2.

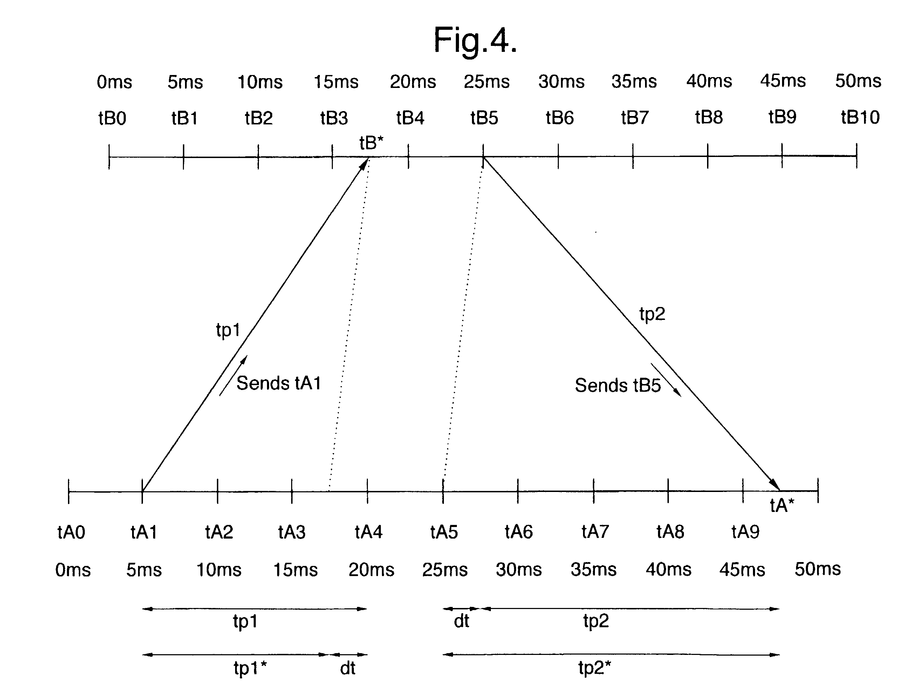

The situation in which one transmission link changes to a longer path is depicted in Figure 4. Here it is assumed that the path delay from B to A has increased by 5ms to 20ms, while that from A to B remains unchanged. In this case, dt having already been calculated at the start of the communications process, that value of clock difference (dt) is preserved, but new values of pseudo propagation delay are calculated, and from that new values of actual propagation delay can be derived.

Taking the timing details of Figure 4, then, we have:

$$
\begin{aligned}
tp1* \ &= \ tB* - tA1 \\
&= \ 17.5ms - 5ms \\
&= \ 12.5ms
\end{aligned}
$$

$$
\begin{aligned}
tp2* \ &= \ tA* - tB5 \\
&= \ 47.5ms - 25ms \\
&= \ 22.5ms
\end{aligned}
$$

From these values, and remembering that dt = 2.5ms, we derive:

$$
\begin{aligned}
tp1 \ &= \ tp1* + dt \\
&= \ 15ms
\end{aligned}
$$

$$
\begin{aligned}
tp2 \ &= \ tp2* - dt \\
&= \ 20ms
\end{aligned}
$$

which are the correct values, as has been ascertained by inspection.

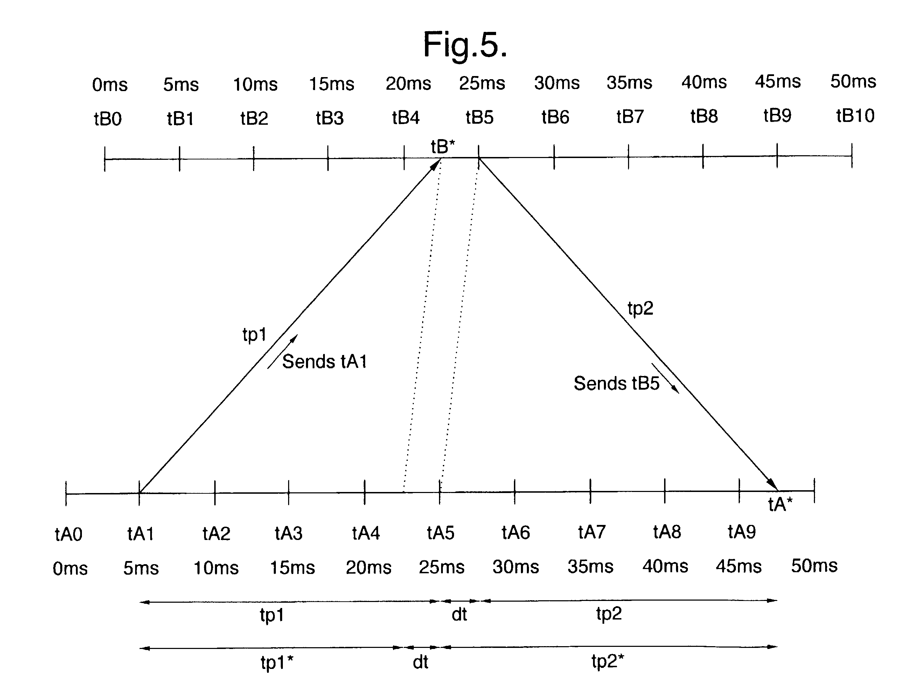

A case in which each channel path increases to 20ms is shown in Figure 5. By analogy with the last example, we derive the pseudo propagation delays as:

$$
\begin{aligned}
tp1* \ &= \ tB* - tA1 \\
&= \ 22.5ms - 5ms \\
&= \ 17.5ms
\end{aligned}
$$

$$
\begin{aligned}
tp2* \ &= \ tA* - tB5 \\
&= \ 47.5ms - 25ms \\
&= \ 22.5ms
\end{aligned}
$$

Hence,

$$tp1 \quad = \quad tp1^* + dt$$
$$= \quad 20ms$$

$$tp2 \quad = \quad tp2^* - dt$$
$$= \quad 20ms$$

which again is the correct answer.

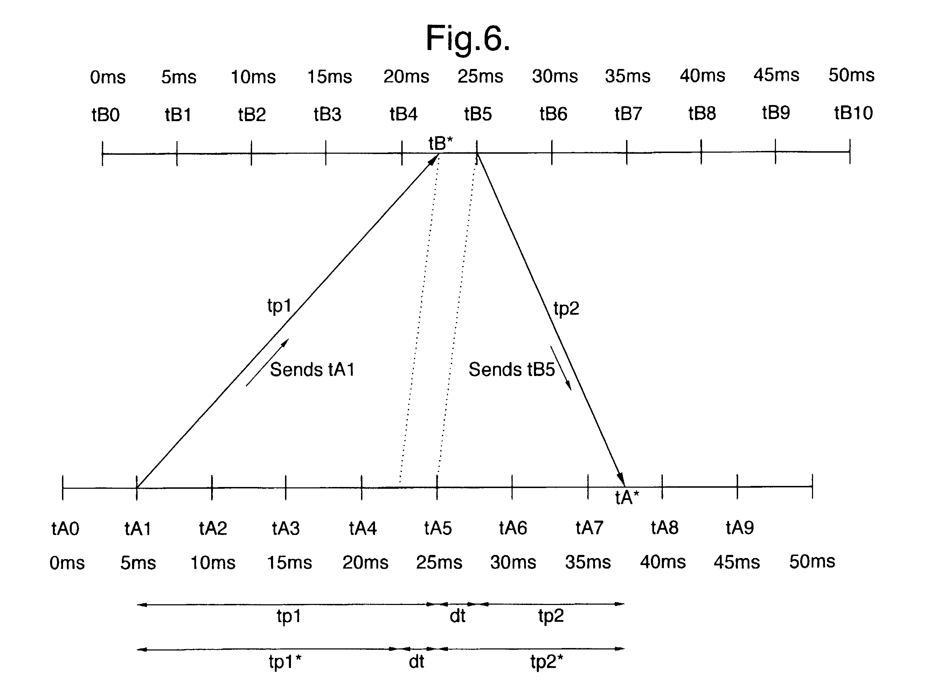

In Figure 6 a situation is shown in which the two channel paths change in opposite directions: that from A to B increases to 20ms, while that from B to A decreases to 10ms. Applying the same equations as before:

$$tp1^* \quad = \quad tB^* - tA1$$
$$= \quad 22.5s - 5ms$$
$$= \quad 17.5ms$$

$$tp2^* \quad = \quad tA^* - tB5$$
$$= \quad 37.5ms - 25ms$$
$$= \quad 12.5ms$$

Hence:

$$tp1 \quad = \quad tp1^* + dt$$
$$= \quad 20ms$$

$$tp2 \quad = \quad tp2^* - dt$$
$$= \quad 10ms$$

which are, as before, the expected values.

Thus, a method has been demonstrated by which the individual true propagation delays (based on the assumption that equal initial delays exist) can be calculated by the two relays and employed in deriving accurate current-vector rotation, even though there may have been a change in communications path in one or both directions. In practice, there will be a continuous monitoring of propagation delay on a cyclical basis, each new pair of values being an update on the last. By simple comparison of each update pair with the last, changes in propagation delay are readily detectable.

Note that, as mentioned earlier in connection with the known relaying system, each relay relies for its calculation of the various parameters on the receipt of the necessary time information from the other relay. Thus, as shown in Figures 4, 5 and 6, the minimum information to be sent by each relay to the other, assuming that the basic clock difference dt has already been derived, is the value of the current vector and the time of transmission of that vector according to the transmitting relay's time reference.

There remains now, however, the question as to how to solve the problem of drift in the clock rates of the individual relays.

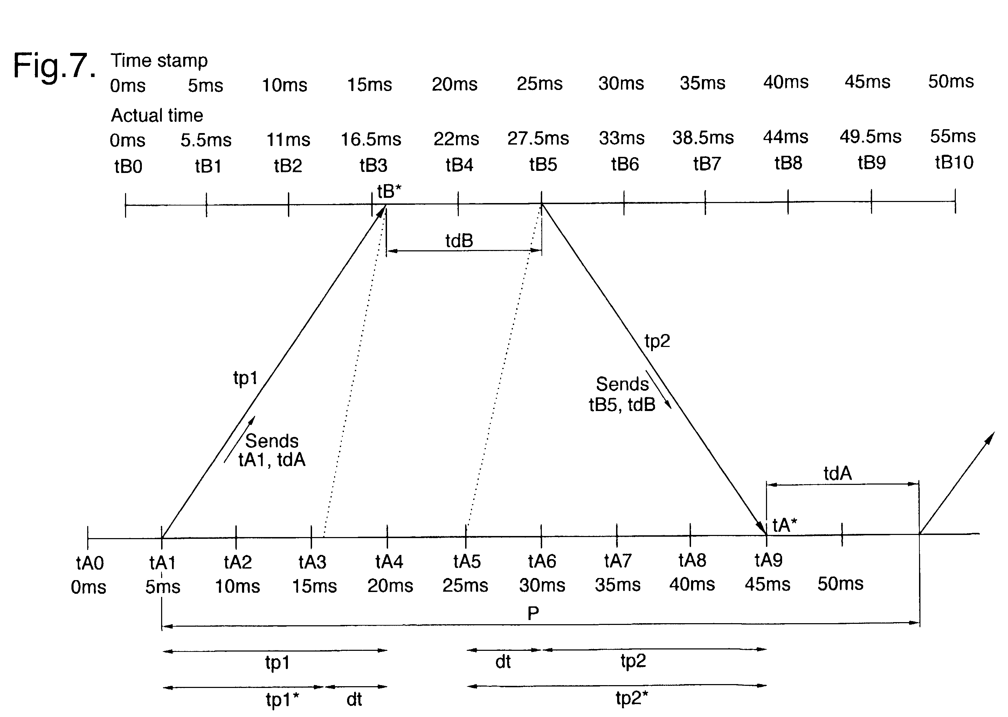

In a practical system either or both of the clocks in the processors of the relays will tend to drift, there being then a net relative drift between those clocks. The situation will therefore be as shown in Figure 7, in which it is assumed that, purely for the sake of argument, the clock of relay A continues to sample at 5ms intervals, while that of relay B has decreased its sampling rate to 1/5.5ms. This drift has been deliberately exaggerated for ease of description, a more realistic drift figure being something like ±50ppm per relay.

Although the clock of relay B is actually sampling slower than it was under the earlier examples (Figures 3-6), its circuitry still assumes that sampling is occurring at the same rate. Thus Figure 7 shows two time scales for relay B: an actual time scale, with 5.5ms sampling period, and a "time stamp" scale of 5ms period.

As before, both relays evaluate both pseudo propagation delays over a period P, i.e. relay A, knowing tA* and tB5 (which is contained in B's message to A), evaluates tp2* and also, knowing tA1 and tB* (via tB5 and $td_B$, both contained in B's message to A), evaluates tp1*, and similarly for relay B.

Using the same relationships as before and comparing "time stamp" figures with "actual" figures (the latter in parentheses):

$$
\begin{aligned}
\text{tp1*} \ = \ & \text{tB* - tA1} \\
= \ & 15.9\text{ms - 5ms (17.5 - 5ms)} \\
= \ & 10.9\text{ms (12.5ms)}
\end{aligned}
$$

$$
\begin{aligned}
\text{tp2*} \ = \ & \text{tA* - tB5} \\
= \ & 45\text{ms - 25ms (45ms - 27.5ms)} \\
= \ & 20\text{ms (17.5ms)}
\end{aligned}
$$

Hence, using the same value of dt as previously:

$$
\begin{aligned}
\text{tp1} \ = \ & \text{tp1* + dt} \\
= \ & 13.4\text{ms (15ms)}
\end{aligned}
$$

$$
\begin{aligned}
\text{tp2} \ = \ & \text{tp2* - dt} \\
= \ & 17.5\text{ms (15ms).}
\end{aligned}
$$

Thus it can be seen that, whereas the actual propagation delays have remained the same (15ms each), it appears to the relays' processing equipment as though they have changed, which could be interpreted as a change in transmission path. It is therefore necessary for the relays to be able to differentiate between a genuine change in propagation delay and an apparent change due to clock drift.

In a practical embodiment of relays A and B, the internal clocks of these relays are controlled by a 16MHz crystal, the accuracy of which is ±50ppm. If it is assumed that the crystal of one relay is at its maximum positive error, while that of the other relay is at its maximum negative error, the net clock drift will be as high as 100ppm, which corresponds to a drift of 100µs in one second.

The minimum count resolution in the communications processor in this embodiment is 16µs and therefore, since over a 5ms sampling period the clock will drift by a maximum of 0.5µs, the processor will not register any change until 32 sampling periods have elapsed.

Now, to detect an apparent propagation-delay change due to drift, the relay processors in the present invention examine the values of tp1* and tp2* and apply a two-stage criterion test to these values, namely that if:

    (a) the values of tp1* and tp2* have changed in opposite directions, and
    (b) these changes increase steadily in the same direction over an extended period of time,

then the change which has been registered will be due to clock drift and not to a change in transmission path.

These two criteria are based on a recognition that, first of all, changes in transmission path in both directions and involving an increased delay in the one case and a decreased delay in the other will be comparatively rare. This can be seen by reference to the examples described above, where the example of "opposite changes" is only one of several possibilities, one of these other possibilities involving a change in one direction only (second example) and another a change in both directions but in the same sense (third example), though it is appreciated that much will depend on the actual path selection available in a practical communications situation.

The second criterion aims to remedy the deficiency just described in the first criterion (i.e. that there is a finite, though low, probability that there will be opposite changes in path occurring more or less together) by recognising that a drift will be relatively slow and monotonic and cumulative in nature, whereas a path change will tend to vary in a random fashion and more sporadically over time. Hence the second criterion requires that a change in tp1*, tp2* in opposite directions occur over a large number of samples and that this change be monotonic.

Where these criteria are satisfied, the relays then adjust the existing value of dt by a value corresponding to the change in pseudo-propagation delays at the end of the total sampling cycle, this value, however, being a multiple of the minimum resolution obtainable from the processors (in the example given earlier, a multiple of 16μs), i.e. both relays modify their value of dt by the same amount in the same sense, positive or negative as appropriate, and dispense with a recalculation of tp1 and tp2. On the other hand, where these criteria are not satisfied, dt remains unmodified and tp1 and tp2 are recalculated to reflect a corresponding change in transmission path length.

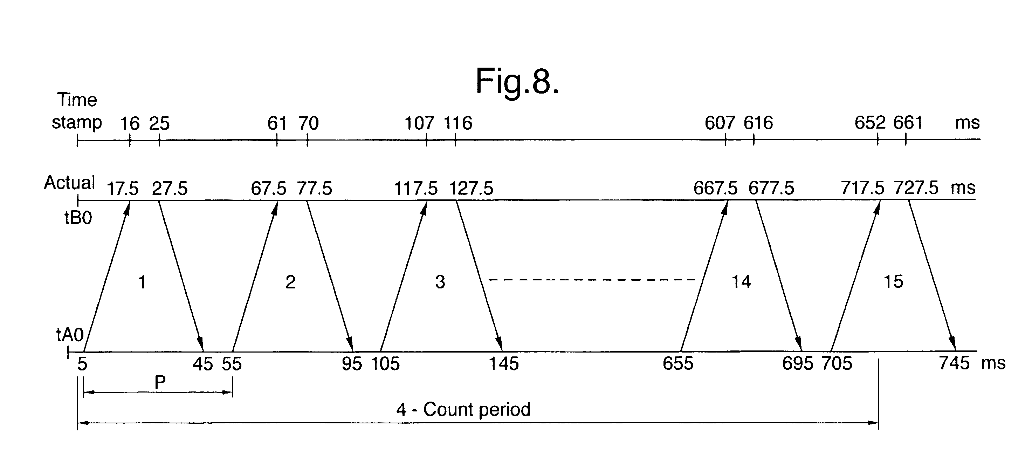

This process is illustrated, purely by way of example, by reference to Figure 8. Figure 8 shows a series of consecutively occurring transmission routines of period P in which relay A transmits to relay B and vice-versa, there being a 10ms gap between receipt and subsequent transmission of a message by either relay. The actual propagation delays are in both cases 15ms, as in Figure 7. Also, as in Figure 7, the drift is shown in exaggerated form, i.e. a 10% drift (100,000ppm). The "actual" and "time-stamp" sampling points are shown on their respective time scales in the upper part of the figure together with their respective time values. It can be seen that there is a 64ms difference between the two after almost 15 periods P (corresponding to approximately 140 samples).

The various relevant parameters relating to the 15th period P are:

tA1 = 705ms
tB* = 652ms
tB5 = 661ms
tA* = 745ms

Going through the equations for the pseudo propagation delays tp1*, tp2* as before, we have:

$$\mathbf{tp1*} = \mathbf{tB* - tA1}$$
$$= 652 - 705$$
$$= -53\text{ms}$$

$$\mathbf{tp2*} = \mathbf{tA* - tB5}$$
$$= 745 - 661$$
$$= 84\text{ms}$$

Hence,

$$\mathbf{tp1} = \mathbf{tp1* + dt}$$
$$= -53 + 2.5$$
$$= -50.5\text{ms}$$

$$tp2 \;=\; tp2^* - dt$$
$$= 84 - 2.5$$
$$= 81.5ms.$$

The values of tp1 and tp2 are not necessarily calculated at this stage, but are shown here in order to illustrate the effect of drift on the calculations of the propagation delays and the obvious risks if such errors are not corrected.

Now, since the relays have registered 4 counts due to the drift in the relay B clock, dt is modified by 4 x 16 = 64ms in a sense such to bring the values of tp1* and tp2* closer together.

Hence we now have:

$$dt' = 2.5 + 64 = 66.5ms.$$

If tp1 and tp2 were to be recalculated at this stage (even though it is known the delays have not changed, but the change in pseudo propagation delays is due to drift), we would arrive at:

$$tp1 = tp1^* + dt$$

$$tp2 = tp2^* - dt$$

i.e.

$$tp1 \;=\; -53 + 66.5$$
$$= 13.5ms$$

$$tp2 \;=\; 84 - 66.5$$
$$= 17.5ms.$$

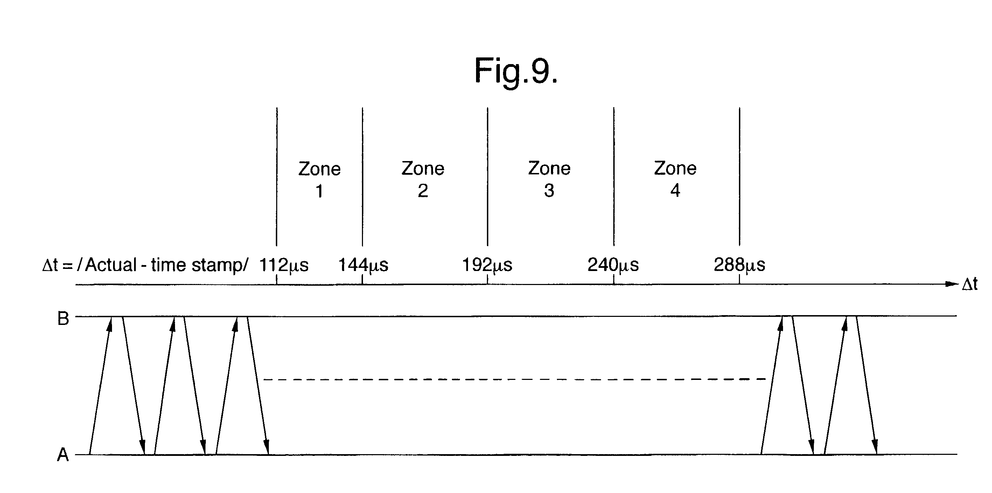

The actual values are 15ms, but it can be clearly seen that the error is due to the fact that the point at which there is an exact 64ms difference between the actual and time-stamp time values in relay B is somewhere between period 14 and the end of period 15 in Figure 9. A similar exercise to the one just carried out but involving period 14 would yield results for tp1 and tp2 of around 18.5ms and 12.5ms, respectively, the differences being in the opposite direction now. Approaching this discrepancy from a different angle, if the processor were not restricted to a minimum resolution of 16ms we could use a more appropriate value of time-difference to modify dt. This more appropriate value might be, for example, the difference between the time-stamp and actual values at the point corresponding to tB* in period 15, i.e. 717.5 - 652 = 65.5. Thus, adding now a further 1.5 to the existing 64ms fed back to change dt, we would arrive at:

$$tp1 \;=\; 13.5 + 1.5$$
$$= 15ms$$

$$tp2 \;=\; 17.5 - 1.5$$
$$= 16ms$$

which clearly corresponds more closely to the actual propagation delays.

In a more preferred version of the drift-compensating method, and referring now to the more realistic drift rates mentioned earlier, to establish criterion (b) four "drift zones" are created in an intercommunication sequence in which the two relays A and B again exchange messages on a continuous cyclical basis; the zones are a 112-144 μs zone, a 144-192 μs zone, a 192-240 μs zone and a 240-288 μs zone (see Figure 9). These figures in μs effectively correspond to the increasing time differences between the "actual" and "time-stamp" time frames shown in Figures 7 and 8, which themselves are related to the changes in pseudo propagation delay.

To satisfy criterion (b) in this preferred arrangement, the locus of clock drift must pass through all the zones from the innermost zone (zone 1) to the outermost zone (zone 4) and must stay in each zone for a specified period, for example 40ms, before it moves on to the next zone. As soon as the "40 ms staying" condition is met for a particular zone, the processor allocates to the locus a flag associated with that particular zone. When the locus has collected four flags, one from each zone, a "clock-drift" event is registered and the before-mentioned adjustment in the value of dt takes place. If the drift locus passes through three zones, but fails to move on to the outermost zone and drifts back to the inner zones, a "clock-drift" event is not registered and the value of dt remains unmodified. If the changes of tp1* or tp2* jump from the innermost to the outermost zone or beyond, the change is deemed to result from a change in communication path rather than from a clock drift.

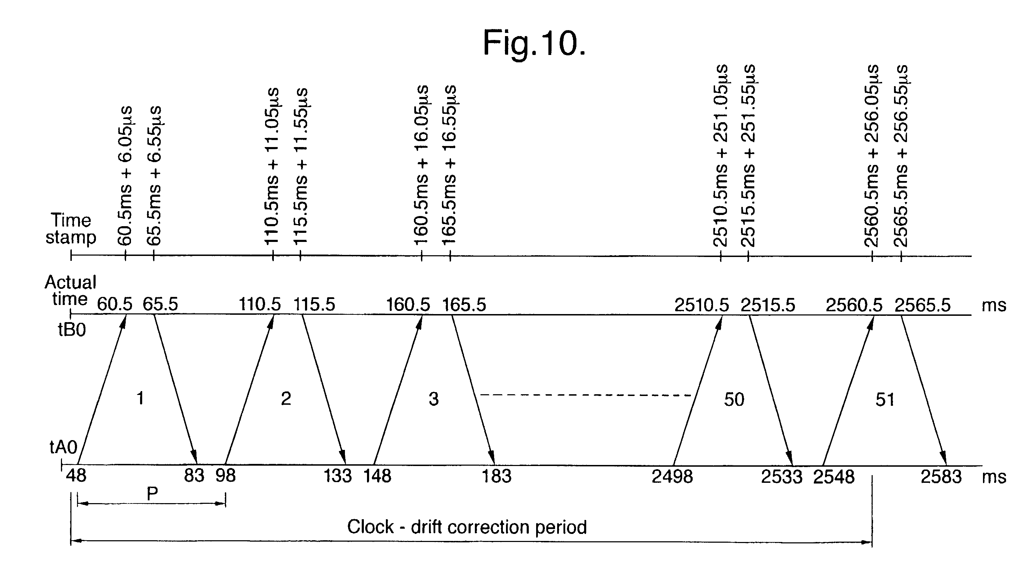

The adjustment in the value of dt in this version is illustrated with reference to Figure 10. Figure 10 corresponds in all essential details to Figure 8, except that the drift is shown in μs and there is a 15ms gap between receipt and subsequent transmission of a message by relay A and an equivalent gap for relay B of 5ms (the drawing is not shown strictly to scale). The actual propagation delays are in both cases 15ms, as in Figures 7 and 8. It can be seen that there is a 256μs difference between the two after 50 periods P (corresponding to about 1024 current samples).

The various relevant parameters relating to period 51 are:

$tA1 = 2548ms$
$tB* = 2560.5ms + 256.05μs$
$tB5 = 2565.5ms + 256.55μs$
$tA* = 2583ms$

Going through the equations for the pseudo propagation delays tp1*, tp2* as before, we have:

$$
\begin{aligned}
tp1* &= tB* - tA1 \\
&= 2560.756 - 2548 \\
&= 12.756 \text{ ms}
\end{aligned}
$$

$$
\begin{aligned}
tp2* &= tA* - tB5 \\
&= 2583 - 2565.756 \\
&= 17.244 \text{ ms}
\end{aligned}
$$

Hence,

$$
\begin{aligned}
tp1 &= tp1* + dt \\
&= 12.756 + 2.5 \\
&= 15.256 \text{ ms}
\end{aligned}
$$

$$tp2 \;=\; tp2^* - dt$$
$$= 17.244 - 2.5$$
$$= 14.744 \text{ ms}$$

Again, as in Figure 8, the values of tp1 and tp2 are not necessarily calculated at this stage, but have been shown here in order to illustrate the effect of drift on the calculations of the propagation delays.

During period 51 in Figure 10, the accumulated error is 256μs, corresponding to a 4.6 (electrical degrees - see Figure 2) error for a 50Hz system and a 5.53 error for a 60Hz system.

Now, since the drift locus has passed through all four zones (periods 50 and 51 are part of the fourth zone since their time differences are 251 and 256 μs, respectively), spending > 40ms in each zone, and a clock-drift value of 256 μs has been registered (this being a multiple of the minimum processor count resolution of 16 μs), this registered value is subtracted from dt to bring the values of tp1, tp2 back to the real propagation delay times.

Hence we now have:

$$dt' = 2.5 + (-0.256) = 2.244ms.$$

If tp1 and tp2 were to be recalculated at this stage (even though, again, it is known that the delays have not changed, but the change in pseudo propagation delays is due to drift), we would arrive at:

$$tp1 = tp1^* + dt' = 12.756 + 2.244 = 15ms$$

$$tp2 = tp2^* - dt' = 17.244 - 2.244 = 15ms.$$

The results of tp1 and tp2 would now be correct.

Again, just as the earlier-described method for calculating the propagation delays was said to be cyclical, so also is this aspect of the invention, with drift compensation taking place on a continual basis.

This method, then, does not correct for clock drift by changing the clock frequency of one or both relays, but provides compensation through software by periodically updating the value of dt arrived at initially at the very start of the communications process. Each new update acts on the value of dt as amended at the last update.

The Table below summarises the calculation procedure performed by the algorithms described so far.

| START | |
|---|---|
| **A**. | Determine basic timings: |
| | **A1**. Record the time when End A sends a message to End B as tA1<br>**A2**. Record the time when the End A message reaches End B as tB*<br>**A3**. Record the time when End B sends a response message to End A as tB5<br>**A4**. Record the time when the End B message reaches End A as tA* |
| **B**. | Calculate pseudo propagation delays: |
| | **B1**. tp1* = tB* - tA1 (sending path)<br>**B2**. tp2* = tA* - tB5 (receiving path) |
| **C**. | Calculate clock drift (offset) dt: |
| | **C1**. Ifthis is the first calculation, then dt = 0.5 (tp2* - tp1*)<br>**C2**. If this is <u>not</u> the first calculation, then dt = previous dt + clock drift |
| **D**. | Calculate actual propagation delays: |
| | **D1**. tp1 = tp1* + dt (sending path)<br>**D2**. tp2 = tp2* - dt (receiving path) |
| END | |

There now follows a positive example of clock drift compensation, presented in the context of a practical system. This is a companion example to the negative example presented with reference to Figure 7. The results from Figure 3 will be used for the first calculation. In particular, the clock offset dt = 2.5 ms will be used as a reference, that is, as "old clock offset" (dt). The maximum clock drift in this system is 40 parts per million (40 ppm), that is, the maximum drift of each clock is ±20 ppm.

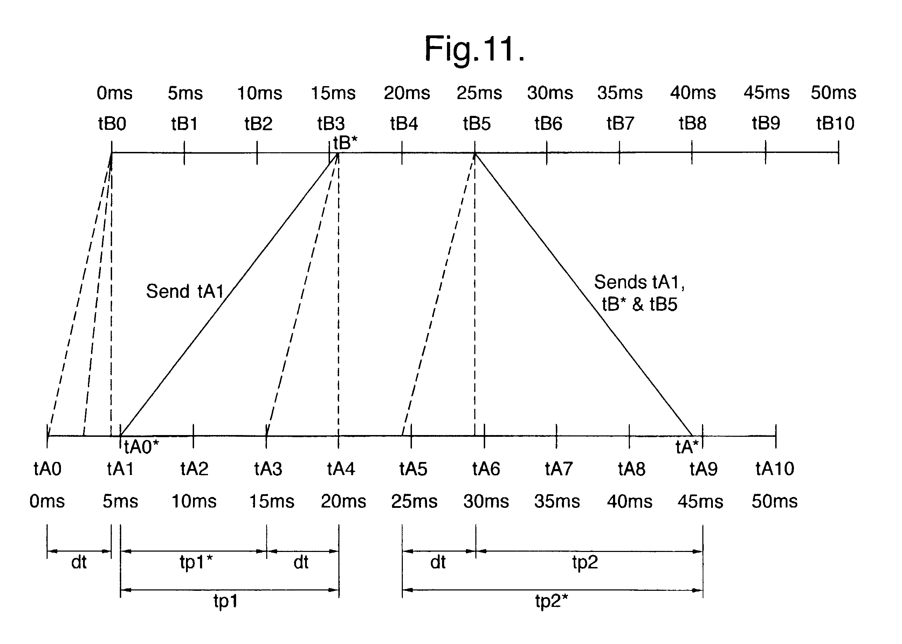

The situation is shown in Figure 11. Note that in Figure 7, the two time axes have different scales. In Figure 11, the two time axes have almost the same scales. This will be explained below, with the calculation process.

In this example, Clock A is counting faster than Clock B by a rate of 40 ppm. Before End A sends out its first message to End B at tA1, there is an accumulated clock drift of 2.0 ms in addition to the original clock offset dt = 2.5 ms. (The 20 ms clock drift is exaggerated in order to make the diagram clearer. In the practical system, the clock drift is limited to no more than a few hundred microseconds, say between 250 - 500 µs.)

In Figure 3 at tA1, the corresponding time at Clock B is 2.5 ms. In Figure 11 at tA1, the corresponding time at Clock B is 4.5 ms because the drift is equivalent to a further delayed counting of Clock B. Thus: new clock offset,

$$dt = previous\ dt + clock\ drift = 2.5\ ms + 2.0\ ms = 4.5\ ms$$

The message from at End A is sent at

$$tA1 = 5\ ms$$

and arrives at End B at

$$tB^* = 15.5\ ms + 0.62\ \mu s \approx 15.5\ ms,$$

where 0.62 µs is the additional clock drift between 0 ms and 15.5 ms on top of the original 2 ms.

Since the drift is so small, the two time axes are almost in the same scale. The message from End B is sent at

$$tB5 = 25\ ms + 1.0\ \mu s \approx 25\ ms$$

and arrives at End A at

$$tA^* = 44.5\ ms$$

where 1.0 µs is the additional clock drift between 0 ms and 25 ms at End B. Thus, the pseudo delay

$$tp1^* = tB^* - tA1 = 15,5 - 5 = 10.5\ ms$$

$$tp2^* = tA^* - tB5 = 44.5 - 25 = 19.5\ ms$$

It can be seen that tp1* here (10.5 ms) is smaller than tp1* derived from Figure 3 (12.5 ms). It can be seen also that the tp2* here (19.5 ms) is bigger than the tp2* derived from Figure 3 (17.5 ms).

With these two new pseudo delays, the results are: Actual delay

$$tp1 = tp1^* + new\ dt = 10.5 + 4.5 = 15\ ms$$

$$tp2 = tp2^* - new\ dt = 19.5 - 4.5 = 15\ ms$$

Without the clock offset compensation, however, the results will be wrong:
Wrong delay

$$tp1 = tp1^* + old\ dt = 10.5 + 2.5 = 13\ ms$$

$$tp2 = tp2^* - old\ dt = 19.5 - 2,5 = 17\ ms$$

The present invention can also cater for breaks in the communications links between the two relays. Here it is assumed that, when the system is running as normal, the drift rate is calculated once every few seconds, e.g. every 6 seconds. When a radio link is broken, the clocks of the two relays continue to drift, it is assumed at the same rate as the last-calculated rate. Thus, when the link is restored, the total net drift over the break-up period is:

$$Drift = Breakup\ period/6\ sec. \times Drift\text{-}rate\ in\ 6\ sec$$

When the link is restored, tp1* and tp2* are recalculated as described above and tpl, tp2 are derived, also as described above, on the basis of the recalculated tp1*, tp2* and the new drift, which is the drift dt obtaining just before breakup of the link, modified by the above drift relating to the breakup period.

While the described embodiment of the invention has assumed certain values for the various parameters, e. g. a sampling period of 5 ms and a delay between receipt and transmission of a message of 15 or 5 ms, other values are equally possible, depending on the application. The same applies to the preferred criteria of a 40ms dwell in any one zone and the definition of the various zones. Also, the invention lends itself to use not just in the power-line measurement field but to any area in which data are to be exchanged between spatially separated equipment. Indeed, the invention can be employed solely for the purpose of measuring propagation delays and detecting changes therein even without there being any concomitant exchange of other data, such as the current-vector data of the described embodiment.

## Claims

1. A method for determining the values of respective propagation delays (tpl, tp2) of send and receive paths in a communications system, said system comprising first and second spatially separated communications apparatus (A, B) each comprising a message-transmitting means, a message-receiving means and a processing means driven by a clock source, the clock sources having a mutual phase relationship (dt), said method being characterised by the steps of:

   - in a first stage:

      (a) establishing respective first approximations (tp1*, tp2*) of said propagation delays (tp1, tp2);
      (b) under an initial assumption that said propagation delays are equal, using said first approximations to derive a value (dt) representative of said phase relationship;
      (c) using said first approximations (tp1*, tp2*) and said phase-relationship value (dt) to derive first values (tp1, tp2) of said propagation delays, said first values being equal values;

   - in each of one or more successive further stages:

      (d) establishing respective further approximations (tp1*, tp2*) of said propagation delays (tp1, tp2), and
      (e) using said further approximations (tp1*, tp2*) and said phase-relationship value (dt) to derive further values (tp1, tp2) of said propagation delays.

2. Method according to Claim 1, in which steps (a) and (d) utilise the following parameters:

   - a first transmit time (tA1), relative to said first apparatus' own clock source, at which said first apparatus (A) transmits a message to said second apparatus (B);
   - a first receive time (tB*), relative to said second apparatus' own clock source, at which said second apparatus (B) receives said message;

- a second transmit time (tB5), relative to said second apparatus' own clock source, at which said second apparatus (B) transmits a further message to said first apparatus (A), and
- a second receive time (tA*), relative to said first apparatus' own clock source, at which said first apparatus (A) receives said further message.

3. Method according to Claim 2, in which an approximation of the propagation delay (tp1) from said first apparatus (A) to said second apparatus (B) and an approximation of the propagation delay (tp2) from said second apparatus (B) to said first apparatus (A) are derived as:

$$tp1^* = tB^* - tA1$$

$$tp2^* = tA^* - tB5$$

where tp1*, tp2* are respective said approximations, tA1 is said first transmit time, tB5 is said second transmit time, tB* is said first receive time and tA* is said second receive time.

4. Method according to Claim 3, in which said value representative of said phase relationship is derived as:

$$dt = 0.5 (tp2^* - tp1^*)$$

where dt is said representative value.

5. Method according to Claim 4, in which in said steps (c) and (e) a propagation delay (tp1) from said first apparatus (A) to said second apparatus (B) and a propagation delay (tp2) from said second apparatus (B) to said first apparatus (A) are derived as:

$$tp1 = tp1^* + dt$$

$$tp2 = tp2^* - dt$$

where tp1, tp2 are respective said propagation delays.

6. Method as claimed in any one of the preceding claims, in which successive further propagation-delay values are compared with respective preceding propagation-delay values with a view to detecting changes in propagation delay.

7. Method for detecting a drift between first and second processor clocks of respective first and second communications apparatus (A, B) in a bi-directional communications system, said first and second apparatus exchanging message data including data representative of a time (tA1, tB5) of transmission of said message data by each apparatus to the other, and of a time period (tdA, tdB) elapsed between receipt by said each apparatus of message data from the other apparatus and said transmission of message data by each apparatus, said transmission time (tA1, tB5) and said time period (tdA, tdB) being referenced to a nominal clock rate of said each apparatus, characterised in that each apparatus (A, B) on a cyclical basis:

(a) derives, from a time (tA*; tB*), referenced to its own nominal clock rate, of receipt of message data from the other apparatus and from said data representative of a transmission time (tA1; tB5) and time period (tdA, tdB), a first value (tp1*) approximating a delay in propagation (tp1) of said message data from said first apparatus (A) to the second (B) and a second value (tp2*) approximating a delay in propagation (tp2) of said message data from said second apparatus (B) to the first (A);
(b) compares said first and second approximating values (tp1*, tp2*) with corresponding values previously obtained, and if corresponding said first values (tp1*) and corresponding said second values (tp2*) have changed in opposite respective directions and if a rate of change is below a predetermined rate, infers that a drift between the clock rates of said first and second clocks has taken place.

8. Method according to Claim 7, in which each apparatus in step (b) determines that said change in said second values (tp1*, tp2*) is monotonic before inferring that a drift has taken place.

9. Method according to Claim 8, in which each said apparatus is arranged to determine values of the propagation delays between said apparatus and, in a further step (c), to employ said inference that a drift has taken place to correct for errors in said propagation-delay values arising as a result of said drift.

10. Method according to Claim 9, in which, in a first cycle at the start of a communications process between said apparatus and subsequent to said step (a), each apparatus derives from said approximating values (tp1*, tp2*) a value (dt) representative of a phase difference between said clocks, and in said first and in subsequent cycles each apparatus derives from said approximating values (tp1*, tp2*) and from said phase-difference representative value (dt) said propagation delay values (tp1, tp2), each said apparatus in subsequent cycles in said step (b) detecting a predetermined amount of change in said approximating values (tp1*, tp2*) and in said step (c) applying that amount to modify said phase-difference representative value (dt).

11. A method for determining the values of respective propagation delays (tp1, tp2) of send and receive paths in a communications system, said system comprising first and second spatially separated communications apparatus (A, B) each communications apparatus comprising a message-transmitting means, a message receiving means and a processing means driven by a clock means, the first and second clock means having first and second clock rates and a mutual phase relationship (dt) therebetween, the method being characterised by the steps of:

   (a) recording a time tA1 when the first communications apparatus (A) sends a message to the second communications apparatus (B) over the send path,
   (b) recording a time tB* when the message from the first communications apparatus (A) reaches the second communications apparatus (B),
   (c) recording a time tB5 when the second communications apparatus (B) sends a response message to the first communications apparatus (A) over the receive path,
   (d) recording a time tA* when the response message reaches the first communications apparatus (A),
   (e) calculating an approximate propagation delay tp1* in the send path as $tp1* = tB* - tA1$,
   (f) calculating an approximate propagation delay tp2* in the receive path as $tp2* = tA* - tB5$,
   (g) calculating the phase relationship dt between the clock sources as $dt = 0.5 \, (tp2* - tp1*)$ if it is an initial calculation of dt at a start of communications between the first and second communications apparatus,
   (h) subsequent to the initial calculation of the phase relationship dt,

      (I) comparing the approximate propagation delay tp1* in the send path and the approximate propagation delay tp2* in the receive path with corresponding values thereof previously obtained,
      (II) detecting that a drift has occurred between the first and second clock rates if tp1* and tp2* change monotonically in opposite directions over a large number of calculations and if the rate of change is below a predetermined rate,
      (III) if a clock drift is detected, deriving a clock drift value ddt from the change in tp1* and tp2* and calculating a new phase relationship $dt_{new}$ as $dt_{new} = dt + ddt$, and

   (i) calculating the propagation delays tpl, tp2 as either

      (I) $tp1 = tp1* + dt_{new}$ for the sending path and $tp2 = tp2* - dt_{new}$ for the response path if a clock drift has been detected, or
      (II) $tp1 = tp1* + dt$ for the sending path and $tp2 = tp2* - dt$ for the response path if a clock drift has not been detected.

12. Method as claimed in any one of Claims 9 to 11, in which a relative drift rate of said clocks is regularly determined and, following a break in a communications link between said first and second communications apparatus, said first and second propagation-delay approximating values are derived and from these values, and a value of drift calculated from the product of the latest said determined drift rate and a duration of said break, the respective propagation-delay values are derived.

13. Method as claimed in any one of the preceding claims, in which said first and second communications apparatus (A, B) are relays connected to respective ends of an electrical power line, said relays transmitting to each other a message which includes electrical-parameter data relating to said line.

# Fig.1a.

Relays

A          B

Current vectors | - - - | | | | tA1

tA1 — tB 1
tA2 — tp1
tA3 — tB2 — tB*
tB3* — td — tB3
tA4 — tp2
tA* — tB4
tA5 — tB5

| tB3 | tA1 | td | - - - | Current vectors |

Data message

# Fig.1b.

φ1 φ2 φ3

17 — Current sensor
10 — μP CK
12 — Message TX
14

18 — Voltage sensor
13 — Message RX
15

16

11

# Fig.2.

$I(tA4)$

$I(tB3^*)$

$I(tA3)$

$\Delta\theta_1$

$\Delta\theta_2$

$\Delta t_1 = tA4 - tB3^*, \; \Delta t_2 = tB3^* - tA3$

$\Delta\theta_1 = \omega\Delta t_1, \; \theta\Delta_2 = \omega\Delta t_2$

# Fig.3.

0ms  5ms  10ms  15ms  20ms 25ms  30ms  35ms  40ms  45ms  50ms

tB0  tB1  tB2  tB3  tB4  tB5  tB6  tB7  tB8  tB9  tB10

tB*

tp1  tp2

tAO*  tA*

tA0  tA1  tA2  tA3  tA4  tA5  tA6  tA7  tA8  tA9

0ms  5ms  10ms  15ms  20ms  25ms  30ms  35ms  40ms  45ms  50ms

tp1   dt   tp2

tp1*   dt   tp2*

# Fig.4.

# Fig.5.

| 0ms | 5ms | 10ms | 15ms | 20ms | 25ms | 30ms | 35ms | 40ms | 45ms | 50ms |
|---|---|---|---|---|---|---|---|---|---|---|
| tB0 | tB1 | tB2 | tB3 | tB4 | tB5 | tB6 | tB7 | tB8 | tB9 | tB10 |

tB*

tp1
Sends tA1

tp2

Sends tB5

tA*

| tA0 | tA1 | tA2 | tA3 | tA4 | tA5 | tA6 | tA7 | tA8 | tA9 |  |
|---|---|---|---|---|---|---|---|---|---|---|
| 0ms | 5ms | 10ms | 15ms | 20ms | 25ms | 30ms | 35ms | 40ms | 45ms | 50ms |

tp1 — dt — tp2

tp1* — dt — tp2*

# Fig.6.

0ms　　5ms　　10ms　　15ms　　20ms　　25ms　　30ms　　35ms　　40ms　　45ms　　50ms

tB0　　tB1　　tB2　　tB3　　tB4　　tB5　　tB6　　tB7　　tB8　　tB9　　tB10

tB*

tp1

Sends tA1

tp2

Sends tB5

tA*

tA0　　tA1　　tA2　　tA3　　tA4　　tA5　　tA6　　tA7　　tA8　　tA9

0ms　　5ms　　10ms　　15ms　　20ms　　25ms　　30ms　　35ms　　40ms　　45ms　　50ms

tp1　　dt　　tp2

tp1*　　dt　　tp2*

EP 0 946 003 A2

Fig.7.

# Fig.8.

EP 0 946 003 A2

Time
stamp  16  25       61  70      107  116            607  616    652  661   ms

Actual  17.5  27.5    67.5  77.5   117.5  127.5        667.5  677.5   717.5  727.5  ms

tB0

$tA0$

1        2       3   -------------  14      15

5        45  55       95 105     145        655     695 705     745  ms

P

4 - Count period

# Fig.9.

EP 0 946 003 A2

Fig.10.

Fig.11.